# EUROPEAN PATENT APPLICATION

(11) **EP 4 681 885 A1**
(43) Date of publication of application: **21.01.2026**
(21) Application number: 24806658.1
(22) Date of filing: 17.05.2024
(51) Int. Cl.: B25H 3/02, B23D 47/02

(54) **CUTTING TOOL AND POWER TOOL SYSTEM**

(30) Priority: 18.05.2023 CN 202310568571
(71) Applicant: Nanjing Chervon Industry Co., Ltd., Nanjing, Jiangsu 211106 (CN)
(72) Inventor: ZHANG, Changning, Nanjing, Jiangsu 211106 (CN); ZHU, Dianbo, Nanjing, Jiangsu 211106 (CN)
(74) Representative: Sun, Yiming
(86) International application number: PCT/CN2024/093870
(87) International publication number: WO 2024/235309

(57) **Abstract**

Provided are a cutting tool and a power tool system, which belong to the technical field of power tools. The cutting tool includes a cutting unit, a workbench, a liquid reservoir, and a housing. The cutting unit includes a motor and a saw blade driven by the motor. The saw blade at least partially protrudes through the workbench. The liquid reservoir is located below the workbench and includes an inner cavity configured to accommodate liquid. The housing includes a box body and a cover body, where the box body is formed with a first accommodation portion, and the first accommodation portion accommodates the liquid reservoir. The cover body is connected to the box body in an openable and closable manner. The cover body and the box body are combined to form a substantially box-shaped storage space, and the cutting unit, the workbench, and the liquid reservoir are accommodated in the storage space. The power tool system includes a toolbox mechanism and the preceding cutting tool. The toolbox mechanism includes at least one toolbox detachably stacked, and the housing can be stacked with the toolbox. The cover body and the box body are combined to form the substantially box-shaped storage space, which facilitates stacking and storage and ensures transportation stability.

## Description

This application claims priority to Chinese Patent Application No. 202310568571.4 filed with the China National Intellectual Property Administration (CNIPA) on May 18, 2023, the disclosure of which is incorporated herein by reference in its entirety.

### TECHNICAL FIELD

The present application relates to the technical field of power tools and, in particular, to a cutting tool and a power tool system.

### BACKGROUND

In the related art, a cutting tool is used as a common power tool, such as an electric circular saw or a tile cutter. In addition to a cutting attachment, the cutting tool further includes a platen for supporting a machined workpiece, a base for supporting the platen, and a water supply assembly. The entire cutting tool is relatively large and heavy and needs additional protection in a transportation process so that the machine is not damaged and the carrier is not hurt by the machine. As a result, it is time-consuming, laborious, and expensive to transport the cutting tool.

This part provides background information related to the present application, and the background information is not necessarily the related art.

### SUMMARY

An object of the present application is to solve or at least alleviate part or all of the preceding problems. An object of the present application is to provide a cutting tool and a power tool system to solve the technical problem in the related art that the cutting tool is inconvenient to transport.

To achieve the preceding object, the present application adopts the technical solutions below.

A cutting tool includes: a cutting unit including a motor and a saw blade driven by the motor; a workbench, where the saw blade at least partially protrudes through the workbench; a liquid reservoir, where the liquid reservoir is located below the workbench and includes an inner cavity configured to accommodate liquid; and a housing including a box body and a cover body, where the box body is formed with a first accommodation portion, and the first accommodation portion is configured to accommodate the liquid reservoir. The cover body and the box body are combined to form a substantially box-shaped storage space, the cutting unit, the workbench, and the liquid reservoir are accommodated in the storage space, and when the cover body moves away from the box body, the workbench is at least partially exposed.

In an example, the cover body selectively covers an opening of the box body, at least one of the box body and the cover body is provided with a first latch, and the first latch is operated to fix the cover body and the box body.

In an example, at least one of the box body and the cover body is provided with a recess, and at least one of the box body and the cover body is provided with a protrusion received by the recess.

In an example, recesses and protrusions of at least two cutting tools mate with each other to form a stacked state along a preset stacking direction.

In an example, the recesses have slots recessed along a direction parallel to the preset stacking direction, and the protrusions extend along the direction parallel to the preset stacking direction to mate with the slots.

In an example, a stop portion is disposed in at least one of the recesses, and at least one sidewall of a respective protrusion mates with the stop portion to limit relative movement between the respective protrusion and the at least one recess in a direction perpendicular to the preset stacking direction.

In an example, at least one of the box body and the cover body is provided with a second latch, the second latch moves between a locking position and an unlocking position, and the second latch limits relative movement between the protrusion and the recess when the second latch is at the locking position.

In an example, the workbench includes: a platen providing a plane that supports a machined workpiece; and a support assembly for supporting the platen, where the platen is slidably connected to the support assembly and is capable of driving the machined workpiece to slide relative to the support assembly along a cutting direction.

In an example, the cutting unit further includes a shield assembly, the shield assembly includes a shield housing and a shield lock, the shield housing covers the saw blade, and the shield lock is capable of locking the shield housing and the workbench.

In an example, an attachment storage portion is formed on the inner wall of the cover body and is capable of storing an attachment.

In an example, the cutting tool further includes a direct current power supply, the direct current power supply powers at least the motor, the box body includes a power supply storage portion, and the direct current power supply is detachably disposed in the power supply storage portion.

In an example, a writing board is disposed on an outer wall of the housing, and the writing board is detachably connected to the housing.

A power tool system includes a cutting tool and at least one toolbox mechanism, where the toolbox mechanism is disposed on the upper side of the cutting tool or the lower side of the cutting tool along a preset stacking direction, and the toolbox mechanism is provided with a recess and a protrusion receivable by the recess.

In an example, relative movement between the toolbox mechanism and the cutting tool is limited when the toolbox mechanism is stacked with the cutting tool.

In an example, the toolbox mechanism includes a traveling component, and the traveling component includes at least wheels.

In an example, the toolbox mechanism includes a toolbox body and a tool cover body that form an accommodation space, and the accommodation space is configured to store a power tool.

In an example, the toolbox mechanism includes a toolbox body and a tool cover body that form an accommodation space, and the accommodation space is configured to store a direct current power supply.

A cutting tool includes: a cutting unit including a motor and a saw blade driven by the motor; a workbench, where the saw blade at least partially protrudes through the workbench; and a liquid reservoir, where the liquid reservoir is located below the workbench and includes an inner cavity configured to accommodate liquid. The workbench includes: a platen providing a plane that supports a machined workpiece and a working groove through which the saw blade at least partially passes; a support assembly for supporting the platen, where the platen has multiple mounting positions relative to the support assembly; and a retaining assembly, where the retaining assembly is configured to fix the platen at a selected mounting position and retain the platen at the selected mounting position when the motor drives the saw blade to work.

In an example, the multiple mounting positions are arranged at intervals along the direction of a first straight line, and the direction of the first straight line intersects with a cutting direction of the machined workpiece.

In an example, the multiple mounting positions are arranged at intervals along the direction of a first straight line, and the direction of the first straight line is parallel to a cutting direction of the machined workpiece.

In an example, the cutting tool further includes a guide assembly extending along a cutting direction, where the guide assembly is used for guiding the machined workpiece to move relative to the platen along the cutting direction, and the guide assembly is detachably disposed on the platen.

In an example, the guide assembly includes a guide member and a locking assembly, the guide member extends along the cutting direction, and the locking assembly is used for limiting relative movement between the guide member and the workbench.

In an example, the locking assembly includes a first locking assembly and a second locking assembly, the first locking assembly is disposed at one end of the guide member and has a locking point with the workbench, and the second locking assembly is disposed at the other end of the guide member and has at least two locking points with the workbench.

In an example, the retaining assembly includes a limiting member and a first locking portion, the limiting member positions the platen and the support assembly, and the first locking portion is disposed on the support assembly and applies a biasing force to at least one side of the platen.

In an example, the retaining assembly includes a magnet and a magnetic attraction member, one of the magnet and the magnetic attraction member is disposed on the platen and the other is disposed on the support assembly, and the magnet and the magnetic attraction member are attracted to each other.

In an example, the platen and the support assembly are provided with a pivot, and the platen is capable of being opened and closed around the pivot and is movable along the direction of a first straight line, where the direction of the first straight line is perpendicular or parallel to the pivot.

In an example, the retaining assembly includes a fastener, and the platen is detachably connected to the support assembly through the fastener.

A cutting tool includes: a cutting unit including a motor and a saw blade driven by the motor; a workbench, where the saw blade at least partially protrudes through the workbench; and a liquid reservoir, where the liquid reservoir is located below the workbench and includes an inner cavity configured to accommodate liquid. The workbench includes: a platen providing a plane that supports a machined workpiece, where the platen includes at least two working grooves through which the saw blade selectively passes; a support assembly for supporting the platen; and a retaining assembly, where the retaining assembly is configured to fix the platen after the saw blade passes through a selected one of the at least two working grooves.

A cutting tool includes: a cutting unit including a motor and a saw blade driven by the motor; a workbench, where the saw blade at least partially protrudes through the workbench; a first liquid reservoir, where the first liquid reservoir is located below the workbench and includes an inner cavity configured to accommodate liquid; and a second liquid reservoir located below the workbench, where the second liquid reservoir and the first liquid reservoir are formed with or connected to a liquid channel, and when the liquid channel communicates with the second liquid reservoir and the first liquid reservoir, the liquid selectively circulates between the first liquid reservoir and the second liquid reservoir.

In an example, a communication port is provided between the first liquid reservoir and the second liquid reservoir, a blocking portion is provided at the communication port, and when the blocking portion is selectively opened, the liquid channel communicates with the second liquid reservoir and the first liquid reservoir.

In an example, the blocking portion includes a one-way valve, and the one-way valve allows the liquid to flow from the second liquid reservoir to the first liquid reservoir.

In an example, the blocking portion is a plug, and the plug is detachably connected to the communication port.

In an example, the second liquid reservoir is a deformable container, and the liquid flows from the second liquid reservoir to the first liquid reservoir when the second liquid reservoir is deformed by a force.

In an example, the second liquid reservoir is a flexible-wall container, or the second liquid reservoir includes bellows.

In an example, the second liquid reservoir is detachably connected to the first liquid reservoir.

In an example, the second liquid reservoir and the first liquid reservoir are connected to each other to form a seal.

In an example, the inner cavity is defined by the bottom of the first liquid reservoir and at least one sidewall of the first liquid reservoir.

In an example, the cutting tool further includes a box body and a cover body, where the cover body and the box body are combined to form a substantially box-shaped storage space, the cutting unit, the workbench, the first liquid reservoir, and the second liquid reservoir are accommodated in the storage space, and when the cover body moves away from the box body, the workbench is at least partially exposed.

### BRIEF DESCRIPTION OF DRAWINGS

FIG. 1 is a structural view of a cutting tool provided in the present application.
FIG. 2 is a top view of the cutting tool provided in FIG. 1.
FIG. 3 is a sectional view of the cutting tool provided in FIG. 1.
FIG. 4 is an exploded view of the structure of the cutting tool in FIG. 1.
FIG. 5 is an exploded view of a partial structure of the cutting tool in FIG. 4.
FIG. 6 is a top view of a cover body provided in the present application.
FIG. 7 is a sectional view taken along A-A of FIG. 6.
FIG. 8 is an enlarged view of part B of FIG. 7.
FIG. 9 is a schematic view showing that multiple cutting tools provided in the present application are stacked.
FIG. 10 is exploded view one of the structure of a cover body provided in the present application.
FIG. 11 is exploded view two of the structure of a cover body provided in the present application.
FIG. 12 is an exploded view of the structure of a cutting tool provided in the present application.
FIG. 13 is a schematic view of a partial structure of the cutting tool in FIG. 12 with a platen slid and displaced.
FIG. 14 is another exploded view of the structure of a cutting tool provided in the present application.
FIG. 15 is a structural view of the cutting tool in FIG. 14 from another angle.
FIG. 16 is an exploded view of the structure of a guide assembly provided in the present application.
FIG. 17 is a structural view of a second mounting member provided in the present application.
FIG. 18 is a structural view of a second locking member provided in the present application.
FIG. 19 is a sectional view of a guide assembly provided in the present application.
FIG. 20 is an enlarged view of part C of FIG. 19.
FIG. 21 is an enlarged view of part D of FIG. 19.
FIG. 22 is a schematic view of a partial structure of the cutting tool in FIG. 14.
FIG. 23 is another schematic view of a partial structure of a cutting tool provided in the present application.
FIG. 24 is a top view of a cutting tool provided in the present application with a cover body and a platen omitted.
FIG. 25 is a cross-sectional view taken along E-E of FIG. 24.
FIG. 26 is a structural view of a power tool system provided in the present application.
FIG. 27 is a sectional view of a partial structure in an example provided in the present application, where a drainage mechanism is in a drainage state.
FIG. 28 is a semi-sectional view of a structure in FIG. 27.
FIG. 29 is a schematic view of a structure from a viewing angle in an example provided in the present application, where a drainage mechanism is in a stored state.
FIG. 30 is a semi-sectional view of a structure in FIG. 29.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

To clearly illustrate technical solutions of the present application, an upper side, a lower side, a left side, a right side, a front side, and a rear side are defined in the drawings of the specification.

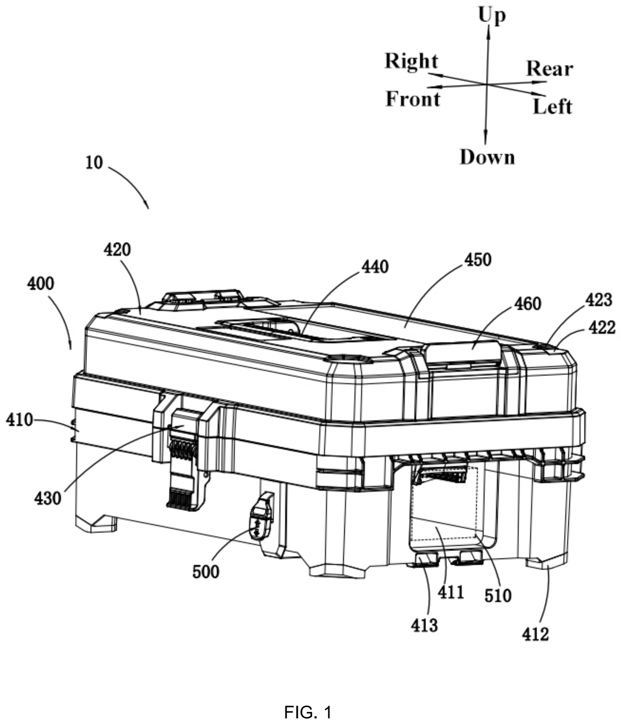

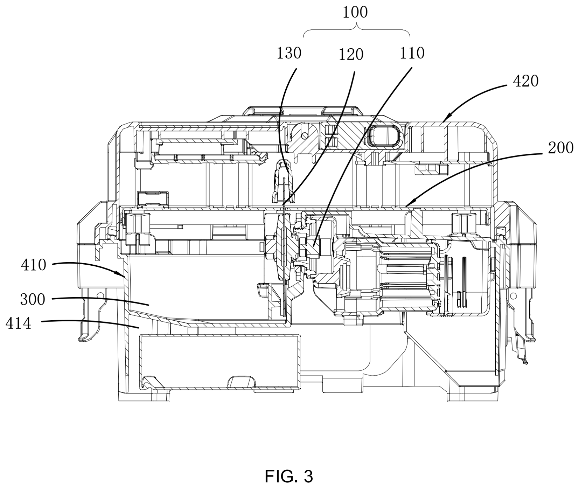

As shown in FIGS. 1 to 4, the present application provides a cutting tool 10. The cutting tool 10 includes a cutting unit 100, a workbench 200, a liquid reservoir 300, and a housing 400. The housing 400 includes a box body 410 and a cover body 420. The cover body 420 is connected to the box body 410 in an openable and closable manner, and the cover body 420 and the box body 410 are combined to form a substantially box-shaped storage space. The cutting unit 100, the workbench 200, and the liquid reservoir 300 are accommodated in the storage space. When the cover body 420 moves away from the box body 410, the workbench 200 is at least partially exposed.

The box body 410 is formed with a first accommodation portion 414. The first accommodation portion 414 accommodates the liquid reservoir 300, and the liquid reservoir 300 is located below the workbench 200 and includes an inner cavity configured to accommodate liquid. The cutting unit 100 includes a motor 110 and a saw blade 120 driven by the motor 110. The saw blade 120 at least partially protrudes through the workbench 200.

During transportation, the cover body 420 and the box body 410 can be closed, and the cutting tool 10 is transported as a whole so that it is convenient to transport and carry the cutting tool 10. Due to the protective effect of the cover body 420 and the box body 410, the machine is not damaged, and a carrier is not hurt by the machine. The cover body 420 and the box body 410 are combined to form the substantially box-shaped storage space, which facilitates stacking and storage and ensures transportation stability. When being used, the cover body 420 and the box body 410 can be opened, the saw blade 120 is driven by the motor 110 to rotate, and the machined workpiece can be cut on the workbench 200.

In some examples, the cutting tool 10 may be a tile saw, and accordingly, the machined workpiece may be a tile. The inner cavity of the liquid reservoir 300 may accommodate liquid, such as water, for cooling the saw blade 120 and removing debris during cutting. Since the saw blade 120 partially protrudes through the workbench 200 and is partially located below the workbench 200 and extends into the liquid reservoir 300, the saw blade 120 is continuously in contact with water to be cooled during the rotation of the saw blade 120.

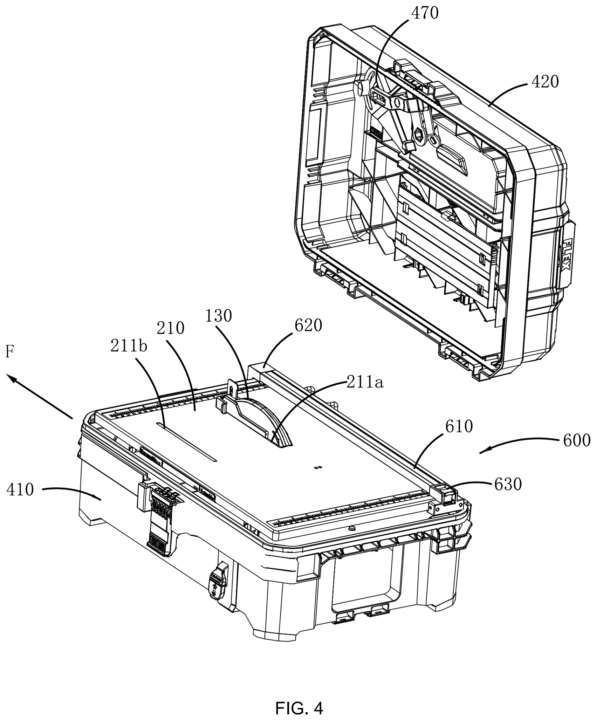

The saw blade 120 extends substantially in a cutting plane. The machined workpiece is fed and cut along a cutting direction F. The cutting direction is parallel to the cutting plane. The cutting direction is shown by an arrow in FIG. 4.

The cover body 420 covers an opening of the box body 410, at least one of the box body 410 and the cover body 420 is provided with a first latch 430, and the first latch 430 is operated to fix the cover body 420 and the box body 410. The first latch 430 is convenient to lock and unlock so that the cover body 420 can be quickly separated from or locked to the box body 410. In this example, when the machined workpiece needs to be machined, the cover body 420 is separated from the box body 410 so that the cover body 420 is prevented from interfering with machining.

In this example, the number of first latches 430 is not limited, and at least two first latches 430 may be disposed to ensure stability. In some examples, after the cover body 420 is inserted into the box body 410, the cover body 420 is locked by the first latch 430. Optionally, a flange is circumferentially provided on the box body 410, an insertion slot is circumferentially provided on the cover body 420, and the flange is inserted into the insertion slot. The first latch 430 may adopt a mechanical latch structure.

In other alternative examples, the cover body 420 and the box body 410 are pivotally connected to each other through a hinge.

Exemplarily, a handle 440 is disposed on the top of the cover body 420. It is convenient to lift the entire cutting tool 10 with the handle 440, which makes it convenient to carry and transport the cutting tool 10. In this example, the handle 440 is rotatably connected to the cover body 420, and the handle 440 is operated to stand up and fall down. The top of the cover body 420 is provided with an accommodation slot 421. The handle 440 is located in the accommodation slot 421 when falling down so that the handle 440 does not protrude from the top surface of the cover body 420, thereby ensuring the flatness of the top surface of the cover body 420.

The cutting tool 10 further includes a direct current power supply 510. The box body 410 includes a power supply storage portion 411, and the direct current power supply 510 is detachably disposed in the power supply storage portion 411. In this example, the power supply storage portion 411 is disposed on a side of the box body 410. The direct current power supply 510 may be a battery pack. The battery pack may be mounted in the power supply storage portion 411 in a pluggable manner for easy mounting and detachment. In some examples, the battery pack may be a lithium battery pack, a solid-state battery pack, or a pouch battery pack. In some examples, the nominal voltage of the battery pack is greater than or equal to 10 V and less than or equal to 100 V. In some examples, the nominal voltage of the battery pack is 12 V, 24 V, 36 V, 48 V, 56 V, or 80 V. The nominal voltage typically refers to a voltage specified by a manufacturer or a vendor on the label, package, user manual, specification, advertisement, marketing document, or another support document of the product so that a user knows which tools can run with the battery pack. Alternatively, the nominal voltage of the battery pack may be detected or calculated. The nominal voltage may be a voltage of the battery pack when the state of charge (SOC) of cells in the battery pack is 50%.

After being separated from the power supply storage portion 411, the battery pack is configured to power other power tools. It is to be understood that the power tool includes a handheld power tool such as an electric drill, a router, a grinder, a string trimmer, a pruner, or a chainsaw. The power tool also includes a table power tool such as a table saw or a miter saw. The power tool also includes a push power tool, for example, a push mower or a push snow thrower. Alternatively, the power tool also includes a riding power tool, for example, a riding mower, a riding vehicle, or an all-terrain vehicle. Alternatively, the power tool may be a robotic tool, for example, a robotic mower or a robotic snow thrower. The power tool also includes a lighting tool. The power tools are used simultaneously in the use environment of the cutting tool 10, thereby improving the adaptability of the cutting tool 10 to other power tools.

It is to be understood by those skilled in the art that the power supply is not limited to the battery pack, and circuit elements may also be powered by mains power, an alternating current power supply, or a combination of mains power and the battery pack in conjunction with the corresponding rectifier circuit, filter circuit, and voltage regulator circuit.

As shown in FIG. 1, a main switch 500 is disposed on an outer wall of the box body 410. The main switch 500 is configured to control the start and stop of the cutting tool 10, and the direct current power supply 510 is electrically connected to the main switch 500. Optionally, the main switch 500 is configured to control a circuit between the motor and the direct current power supply 510 to be on or off.

A writing board 450 is disposed on an outer sidewall of the housing 400, and the writing board 450 is detachably connected to the housing 400. Writing may be performed through the writing board 450. For example, parameter information of the cutting tool 10 is written through the writing board 450 for easy lookup. In this example, the writing board 450 is disposed on the top of the cover body 420. In some examples, the writing board 450 is fixedly connected to the housing 400 or is formed on the housing 400.

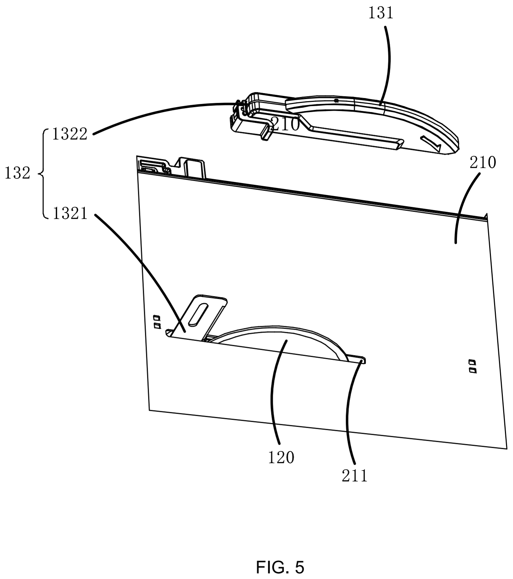

As shown in FIGS. 4 and 5, the cutting unit 100 further includes a shield assembly 130. The shield assembly 130 covers the periphery of the saw blade 120 to prevent the saw blade 120 from hurting an operator. Referring to FIG. 5, the shield assembly 130 includes a shield housing 131 and a shield lock 132. The shield housing 131 covers the periphery of the saw blade 120, and for example, the shield housing 131 at least partially covers a portion of the saw blade 120 protruding from the workbench 200. The shield lock 132 can lock the shield housing 131 and the workbench 200. In this example, the workbench 200 is provided with a lock piece 1321, and the shield housing 131 is provided with a lock catch 1322. When the shield housing 131 covers the saw blade 120, the lock piece 1321 is inserted into the lock catch 1322, and the lock catch 1322 can be locked by a rotatable handle so that the shield housing 131 is fixed to the workbench 200. An accommodation space is formed on an inner wall of the cover body 420. When the cover body 420 and the box body 410 are closed, the height of the accommodation space formed by the cover body 420 is greater than the height of the shield housing protruding from the workbench 200. When the cover body 420 is combined with the box body 410, the shield housing 131 does not need to be detached.

In some examples, at least two cutting tools 10 are detachably stacked along a preset stacking direction to facilitate storage and transportation. In this example, at least one of the box body 410 and the cover body 420 is provided with a recess 422, and at least one of the box body 410 and the cover body 420 is provided with a protrusion 412 received by the recess 422. Recesses 422 and protrusions 412 of two cutting tools 10 mate with each other to form a stacked state along the preset stacking direction.

In this example, the recesses 422 have slots recessed along the stacking direction, and the protrusions 412 extend along the stacking direction to mate with the slots. In a stacking process, a protrusion 412 of one cutting tool 10 is inserted into a respective slot of another cutting tool 10.

Exemplarily, as shown in FIG. 1, the top of the cover body 420 is provided with recesses 422, the bottom of the box body 410 is provided with protrusions 412, and the preset stacking direction is a vertical direction. Multiple cutting tools 10 may be stacked along the vertical direction. The number of recesses 422 and the number of protrusions 412 are not limited herein as long as the recesses 422 are in a one-to-one correspondence to the protrusions 412.

In some examples, a stop portion 423 is disposed in at least one of the recesses 422, and at least one sidewall of a respective protrusion 412 mates with the stop portion 423 to limit relative movement between the respective protrusion 412 and the recess 422 in a direction perpendicular to the stacking direction. The stop portion 423 is disposed so that the stability of the stacked cutting tools 10 can be ensured.

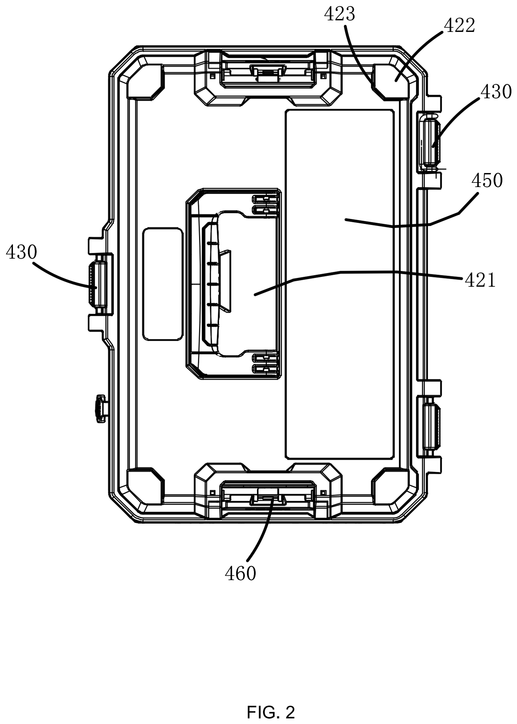

Optionally, as shown in FIG. 2, the recesses 422 are provided at corners of the cover body 420, and the protrusions 412 are provided at corners of the box body 410. The sidewall of the recess 422 is formed with the stop portion 423, and the at least one sidewall of the protrusion 412 mates with the stop portion 423.

At least one of the box body 410 and the cover body 420 is provided with a second latch. In this example, the second latch 460 is disposed on the outer wall of the cover body 420, and the second latch 460 is movable between a locking position and an unlocking position. The second latch 460 limits relative movement between the protrusion 412 and the recess 422 when the second latch 460 is at the locking position. The second latch 460 can lock the cover body 420 and a box body 410 stacked on the cover body 420. The second latch 460 can not only limit the movement of the protrusion 412 and the recess 422 in the stacking direction but also limit the movement of the protrusion 412 and the recess 422 in the direction perpendicular to the stacking direction so that the cutting tools 10 are stacked more stably and the safety is ensured.

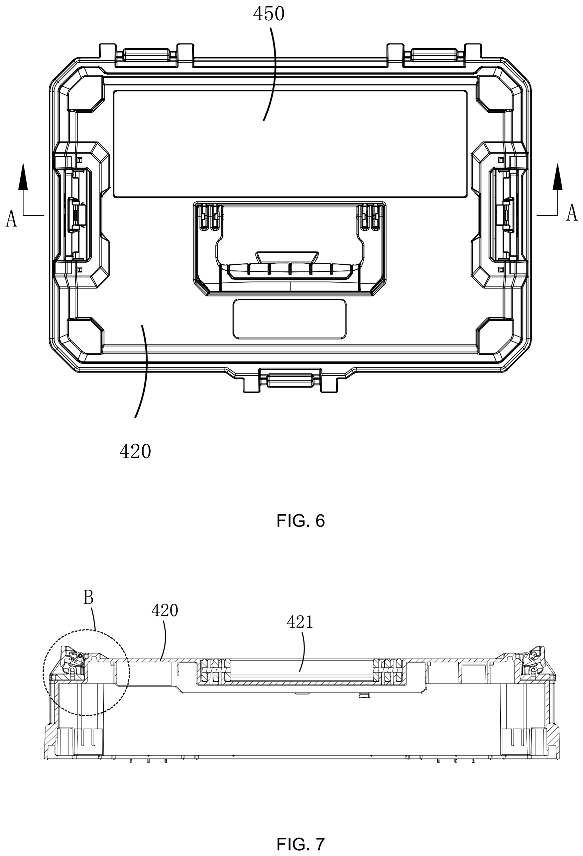

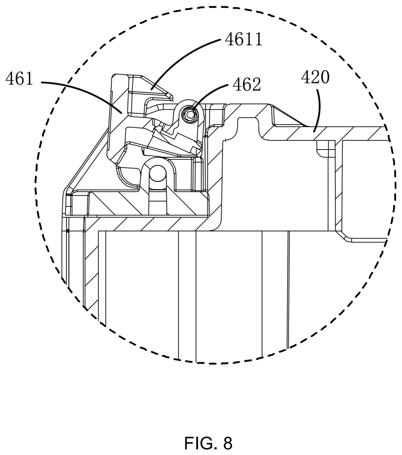

The second latch 460 is movably connected to the cover body 420. For example, the second latch 460 is disposed on the cover body 420 in a rotatable, swingable, or displaceable manner. As shown in FIG. 1 and FIGS. 6 to 10, the second latch 460 includes a second latch body 461 and an elastic member 462. The second latch body 461 is rotatably disposed on the cover body 420. A locking protrusion 4611 is provided on a side of the second latch body 461. The locking protrusion 4611 is insertable into a locking slot 413 on the box body 410. The second latch body 461 and the cover body 420 are specifically connected to each other through a pivot, and the elastic member 462 is sleeved on the pivot.

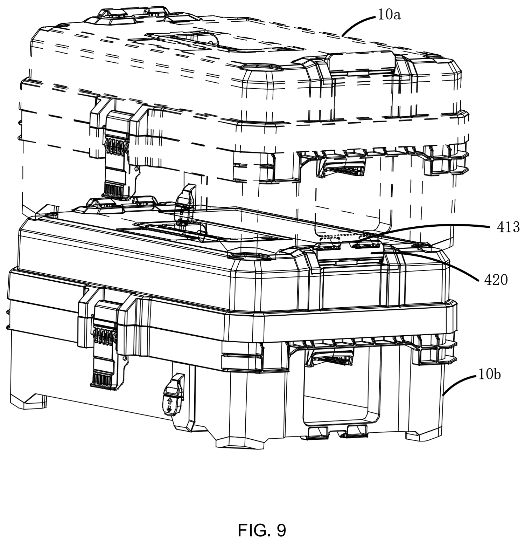

As shown in FIG. 9, when two or more cutting tools 10 are stacked, the box body 410 of one cutting tool 10a is located on the cover body 420 of another cutting tool 10b, and when the second latch body 461 is at the locking position, the locking protrusion 4611 is inserted into the locking slot 413 on the box body 410 to limit the relative movement between the protrusion 412 and the recess 422. The second latch body 461 is rotated so that the second latch body 461 is rotated from the locking position to the unlocking position. In this case, the elastic member 462 stores elastic potential energy, the locking protrusion 4611 is separated from the locking slot 413, the box body 410 of the one cutting tool 10a can be detached from the cover body 420 of the other cutting tool 10b, and the two cutting tools 10 are out of the stacked state.

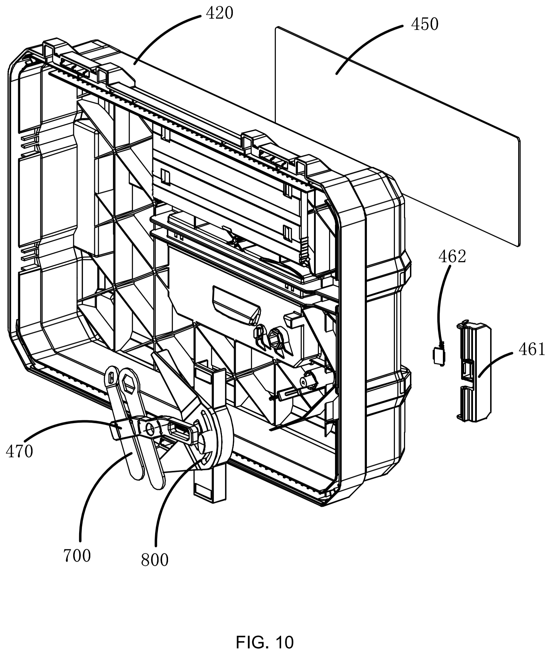

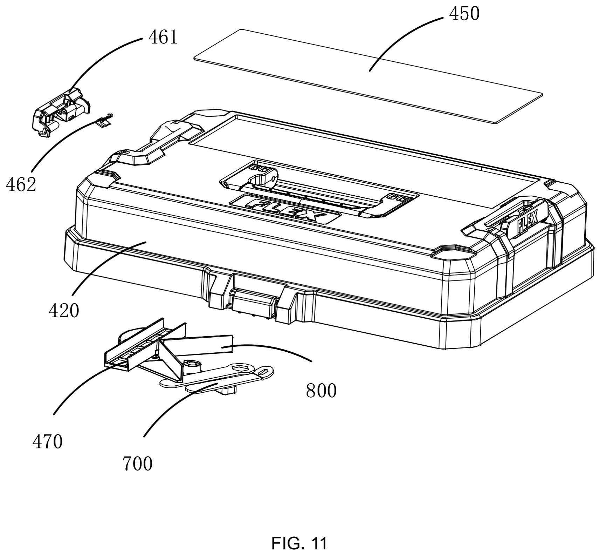

As shown in FIGS. 10 and 11, an attachment storage portion 470 is formed on the inner wall of the cover body 420. The attachment storage portion 470 is capable of storing an attachment. For example, a wrench 700 or a square 800 may be stored. Optionally, the attachment storage portion 470 may include a clamping slot through which the attachment is clamped, or the attachment storage portion 470 may include a magnet, and the attachment is fixed through magnetic attraction.

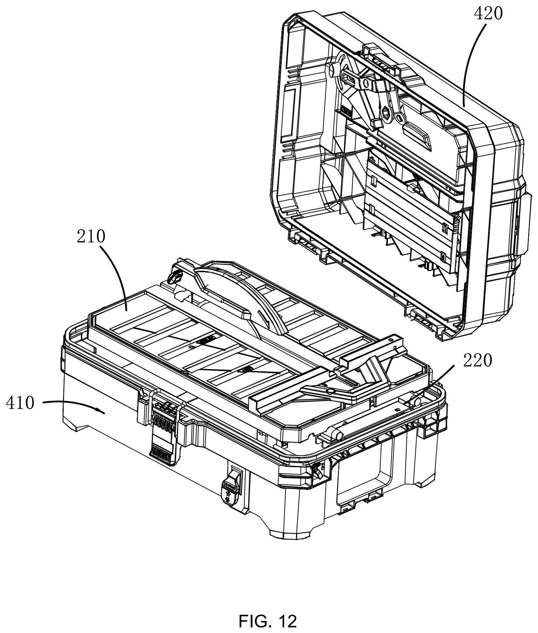

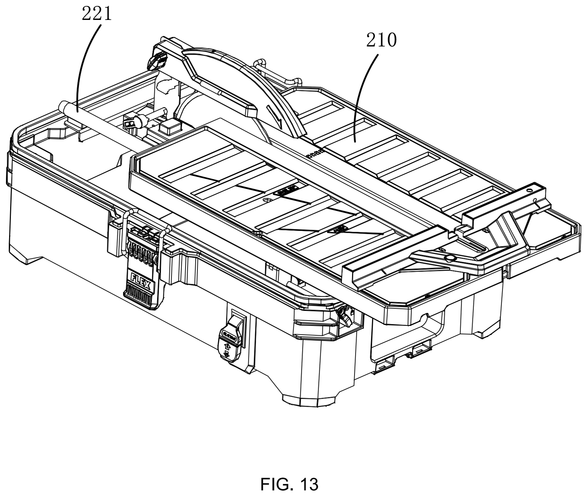

As shown in FIGS. 12 to 15, the workbench 200 includes a platen 210 and a support assembly 220. The platen 210 provides a plane that supports the machined workpiece, and the saw blade 120 at least partially protrudes through the platen 210. The support assembly 220 is used for supporting the platen 210. In some examples, the platen 210 is slidably connected to the support assembly 220 and is capable of driving the machined workpiece to slide relative to the support assembly 220 along the cutting direction. Referring to FIGS. 12 and 13, the support assembly 220 includes a guide rail 221, a slider is disposed on the platen 210, and the slider is slidably connected to the guide rail 221. It is to be understood that the guide rail 221 extends in a direction parallel to the cutting direction. Therefore, the platen 210 is slidable along the cutting direction, and the machined workpiece is driven to slide as the platen 210 slides so that the machined workpiece is in contact with the saw blade 120 to be cut.

In the tile saw, the size of the platen 210 is fixed, and the tile saw is applicable to limited tile specifications. As large-area tiles are increasingly demanded, tile saws of different sizes need to be provided for tiles of different specifications, resulting in high costs and a large occupied space.

In the cutting tool 10 provided in the present application, the position of the platen 210 is adjustable to make the platen 210 compatible with more tile specifications and a larger tile size.

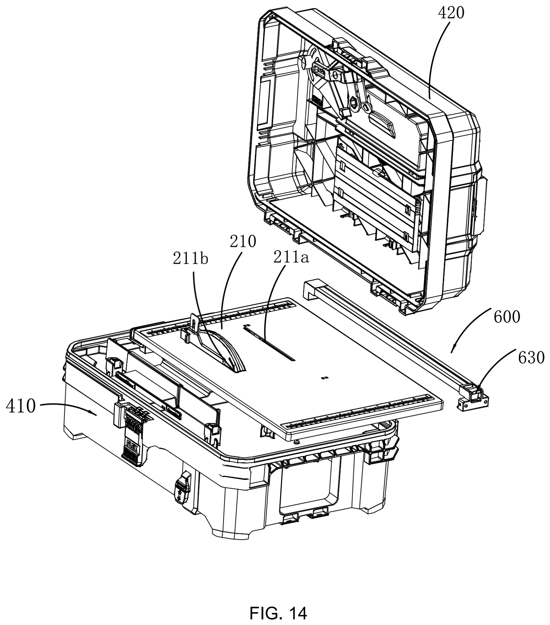

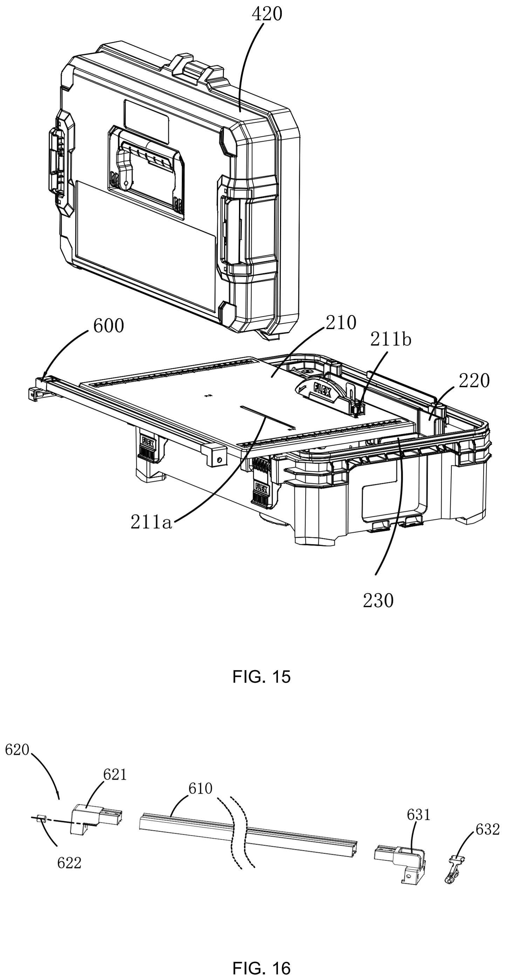

In some examples, referring to FIGS. 14 and 15, the platen 210 has multiple mounting positions relative to the support assembly 220, and the workbench 200 includes a retaining assembly 230. The retaining assembly 230 is configured to fix the platen 210 at a selected mounting position and retain the platen 210 at the selected mounting position when the motor 110 drives the saw blade 120 to work. That is to say, when the tile is cut, the platen 210 and the support assembly 220 are fixed, and when the tile is not cut, the position of the platen 210 can be adjusted according to the size of the tile, and then the platen 210 is fixed after the position is adjusted. The position of the platen 210 is adjusted so that the use scenario is expanded and the platen 210 is suitable for tiles with larger sizes.

In some examples, the platen 210 includes at least two working grooves 211 through which the saw blade 120 selectively passes. The retaining assembly 230 is configured to fix the platen 210 after the saw blade 120 passes through a selected working groove 211. The position of the platen 210 is adjusted so that the saw blade 120 passes through different working grooves 211 to cut tiles of different specifications. In this example, the saw blade 120 passes through different working grooves 211 such that the distance from the saw blade 120 to the edge of the platen 210 is different. Exemplarily, as shown in FIG. 4, when the saw blade 120 passes through a working groove 211a, the cutting tool can cut a 12-inch tile along a straight edge. As shown in FIG. 14, when the saw blade 120 passes through another working groove 211b, the cutting size of the cutting tool is expanded, the distance from the saw blade 120 to the edge of the platen is increased, and the cutting tool can cut the 12-inch tile along a diagonal line.

In some examples, the platen 210 is a stainless steel plate.

As shown in FIG. 15, the cutting tool 10 further includes a guide assembly 600. The guide assembly 600 is detachably disposed on the platen 210 and extends along the cutting direction F, where the guide assembly 600 is used for guiding the machined workpiece to move relative to the platen 210 along the cutting direction. When the cutting tool 10 is used, a side or corner of the tile is caused to abut against the guide assembly 600, and the tile is pushed and fed to be cut. When a side of the tile abuts against the guide assembly 600, the cutting tool 10 cuts the tile along a straight edge. When a corner of the tile abuts against the guide assembly 600, the cutting tool 10 cuts the tile along a diagonal line.

In some examples, the multiple mounting positions are arranged at intervals along the direction of the first straight line, and the direction of the first straight line intersects with the cutting direction. For example, the direction of the first straight line is perpendicular to the cutting direction. In some other examples, the multiple mounting positions are arranged at intervals along the direction of the first straight line, and the direction of the first straight line is parallel to the cutting direction. In some examples, multiple working grooves are arranged at intervals along the direction of the first straight line, and the direction of the first straight line intersects with the cutting direction. For example, the direction of the first straight line is perpendicular to the cutting direction. In some other examples, the multiple working grooves are arranged at intervals along the direction of the first straight line, and the direction of the first straight line is parallel to the cutting direction.

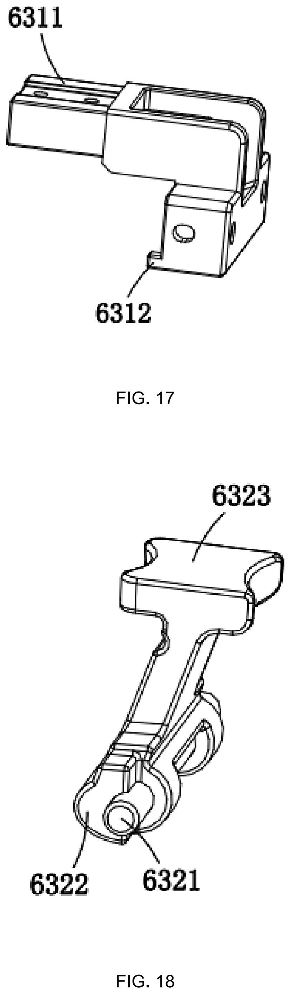

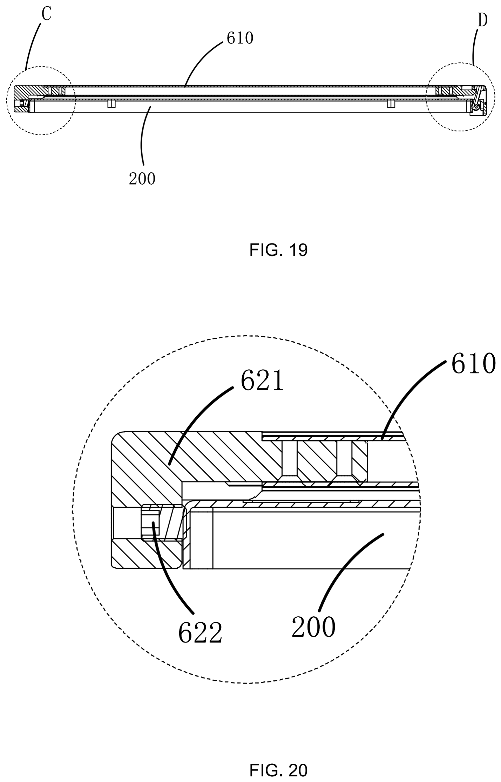

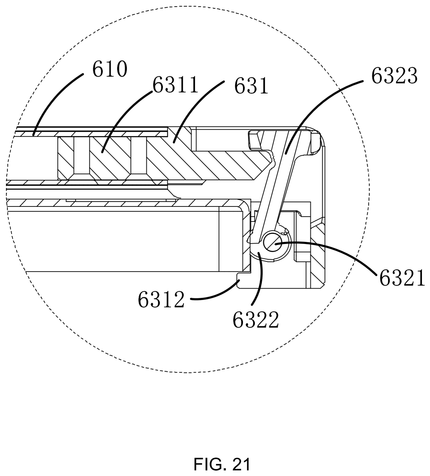

Referring to FIGS. 16 to 21, the guide assembly 600 includes a guide member 610 and a locking assembly. The guide member 610 is detachably connected to the workbench 200, and the locking assembly provides a retaining force for retaining the guide member 610 on the workbench 200. In this example, the guide member 610 extends along the cutting direction F, and the locking assembly includes a first locking assembly 620 and a second locking assembly 630. The first locking assembly 620 is disposed at one end of the guide member 610 and has a locking point with the workbench 200, and the second locking assembly 630 is disposed at the other end of the guide member 610 and has at least two locking points with the workbench 200.

The guide member 610 cooperates with the locking assembly to be capable of correcting the guide member 610. The one locking point exists between the first locking assembly 620 and the workbench 200, and the position of the guide member 610 is adjustable within a small range when the second locking assembly 630 is released. Since the at least two locking points exist between the second locking assembly 630 and the workbench 200, three locking points form a triangle to lock and correct the guide member 610 when the second locking assembly 630 is locked.

**In** this example, the first locking assembly 620 includes a first mounting member 621 and a first stopper 622. The first mounting member 621 positions and is connected to the end of the guide member 610, and the first stopper 622 is connected to the first mounting member 621 through threads and abuts against one end of the workbench 200. The first stopper 622 is in point contact with the workbench 200 to form the locking point, and the locking point is located at the end of the workbench 200.

The second locking assembly 630 includes a second mounting member 631 and a second locking member 632. The second mounting member 631 positions and is connected to the other end of the guide member 610, and the second locking member 632 is connected to the second mounting member 631 rotatably and can abut against the other end of the workbench 200. The second locking member 632 has at least two contact points with the workbench 200 to form the locking points.

The second mounting member 631 is provided with a mounting groove. The second locking member 632 is disposed in the mounting groove. The second locking member 632 includes a rotating shaft 6321, a locking portion 6322, and an operation portion 6323. The rotating shaft 6321 is rotatably connected to the second mounting member 631. The locking portion 6322 is sleeved on the rotating shaft 6321. The operation portion 6323 is connected to the locking portion 6322. The operation portion 6323 is pushed or pulled to be capable of driving the locking portion 6322 to rotate to implement locking or unlocking. In a locking process, the locking portion 6322 abuts against or interlocks with the workbench 200, and in an unlocking process, the locking portion 6322 is separated from the workbench 200.

In this example, the locking portion 6322 may adopt a cam structure. In some other alternative examples, the locking portion 6322 may adopt other eccentric structures, and position locking is performed through stop points of the eccentric structures. In some examples, the locking portion 6322 may be, for example, a snap, a mutually mated groove structure, or a hole-shaft structure as long as the structure enables the locking portion 6322 to abut against or interlock with the workbench 200 in the locking process and enables the locking portion 6322 to be separated from the workbench 200 in the unlocking process.

The second mounting member 631 includes a connecting portion 6311 and a second limiting portion 6312. The connecting portion 6311 is inserted into the guide member 610, and the second limiting portion 6312 is located below the workbench 200 and used for limiting the movement of the second mounting member 631 along an up and down direction. In this example, the connecting portion 6311 is located above the mounting groove, and the second limiting portion 6312 is located below the mounting groove.

The square 800 shown in FIGS. 9 and 10 can mate with the guide member 610 to implement a guide function. In this example, a sliding groove is provided on the back of the square 800. The sliding groove can mate with the guide member 610 slidably. One corner of the tile is insertable into the square 800. As the tile is fed, the square 800 slides along the guide member 610 to guide the tile along the diagonal line or at a set angle. Thus, it is convenient to cut the tile.

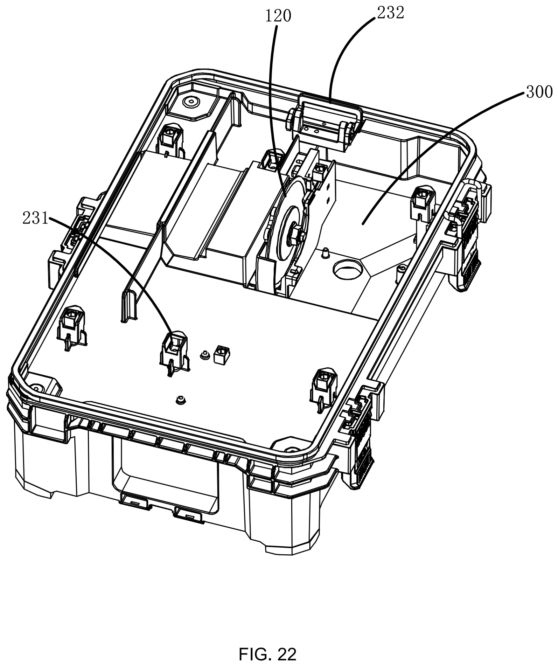

In some examples, referring to FIG. 22, the retaining assembly 230 includes a limiting member 231 and a first locking portion 232, and the limiting member 231 positions the platen 210 and the support assembly 220. Exemplarily, the limiting member 231 is disposed on the support assembly 220 and inserted into the platen 210. The first locking portion 232 is disposed on the support assembly 220 and can apply a biasing force to at least one side of the platen 210. When the platen 210 is mounted, the limiting member 231 is inserted into the platen 210 to position the platen 210, and then the first locking portion 232 is caused to abut against the at least one side of the platen 210 such that the first locking portion 232 applies the biasing force to the platen 210 to lock the platen 210.

In this example, the limiting member 231 is a limiting protrusion disposed on the support assembly 220. The first locking portion 232 may include a lock catch and a torsion spring. The lock catch is rotatably disposed on the support assembly 220. The lock catch is L-shaped for the convenience of clamping one end surface of the platen 210. The lock catch and the support assembly 220 are specifically connected to each other through a rotating shaft, and the torsion spring is sleeved on the rotating shaft. The first locking portion 232 can be opened by swinging the lock catch so that it is convenient to position the platen 210. After the platen 210 is positioned, the lock catch is released, and the lock catch is reset and abuts against one end of the platen 210 under the action of the torsion spring.

In other examples, the retaining assembly 230 includes a magnet and a magnetic attraction member. One of the magnet and the magnetic attraction member is disposed on the platen 210 and the other is disposed on the support assembly 220. The magnet and the magnetic attraction member can be attracted to each other. Optionally, the magnet is disposed on the back of the platen 210, and the magnetic attraction member is disposed on the support assembly 220. In this example, the magnet may be embedded in the platen 210, and the magnetic attraction member may be a screw.

In other examples, the retaining assembly 230 includes a fastener, and the platen 210 and the support assembly 220 are detachably connected to each other through the fastener. The fastener may be a bolt.

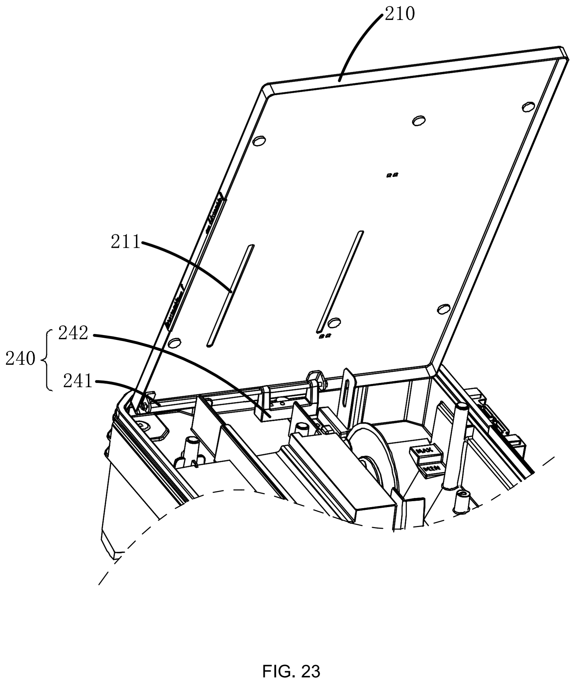

When the retaining assembly 230 in each of the preceding examples is used alone, the entire platen 210 needs to be detached and separated from the support assembly 220 if the position of the platen 210 is adjusted. After being adjusted to a required position, the platen 210 is mounted. In some examples, as shown in FIG. 23, a pivotal displacement assembly 240 is disposed between the platen 210 and the support assembly 220. With the pivotal displacement assembly 240, the platen 210 can be turned over and translated linearly after being turned over. Thus, the position of the platen 210 can be adjusted without detaching the platen 210.

Referring to FIG. 23, the pivotal displacement assembly 240 includes a pivot 241. The pivot 241 is disposed between the platen 210 and the support assembly 220. The platen 210 is capable of being opened and closed around the pivot 241 and is movable along the direction of the first straight line. In this example, the direction of the first straight line is perpendicular or parallel to the extension direction of the pivot 241. When the position of the platen 210 needs to be adjusted, the operator removes the shield housing 131, then lifts the platen 210, slides the platen 210 along the direction of the first straight line to a specified position, and lowers the platen 210. In the process where the platen 210 is lifted and lowered, the platen 210 rotates about the pivot 241.

In this example, the pivotal displacement assembly 240 further includes a support 242, and the pivot 241 is rotatably connected to the support 242. If the direction of the first straight line is perpendicular to the extension direction of the pivot 241, the support 242 may be slidably connected to the support assembly 220, and the support 242 slides along the direction of the first straight line. If the direction of the first straight line is parallel to the extension direction of the pivot 241, the pivot 241 may be inserted through the support 242 and is slidable along the length direction thereof. In this example, the pivotal displacement assembly 240 is used in conjunction with a bolt, and after the platen 210 is lowered, the platen 210 and the support assembly 220 are locked through the bolt. In some examples, the pivotal displacement assembly 240 may be used in conjunction with a magnetic assembly, and after the platen 210 is lowered, the platen 210 and the support assembly 220 are locked through the attraction between a magnet and a magnetic attraction member.

In this example, the inner cavity of the liquid reservoir 300 may accommodate water for cooling the saw blade 120. However, in the process where the cutting tool 10 is transported, the liquid in the liquid reservoir 300 may spill. Preferably, the liquid is removed in advance, and the liquid is added again during use. The liquid is frequently removed and added, which is time-consuming and laborious.

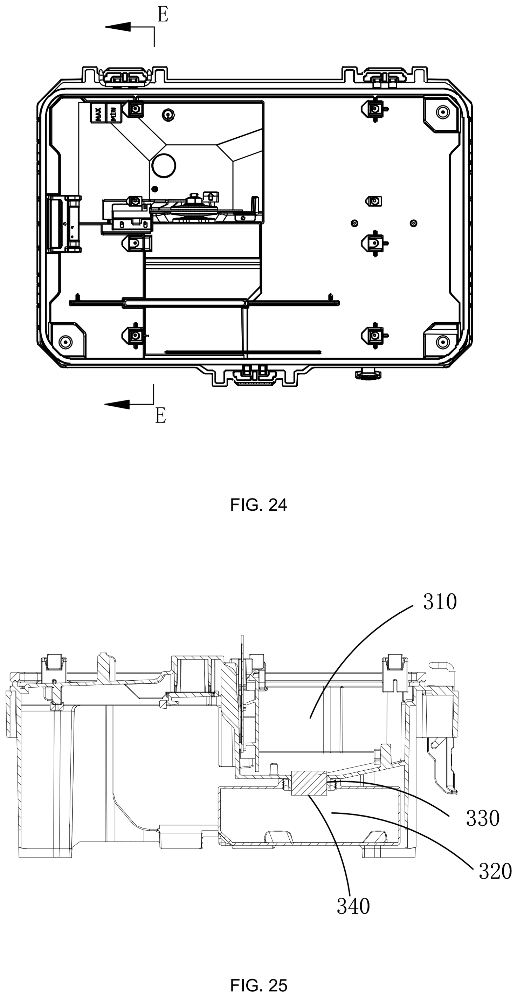

In some examples, at least two liquid reservoirs 300 are provided. As shown in FIG. 24 and FIG. 25, the cutting tool 10 includes a first liquid reservoir 310 and a second liquid reservoir 320. The first liquid reservoir 310 is located below the workbench 200 and includes an inner cavity configured to accommodate liquid. The second liquid reservoir 320 is located below the workbench 200. The second liquid reservoir 320 and the first liquid reservoir 310 are formed with or connected to a liquid channel 330 for the liquid to pass through. When the liquid channel 330 communicates with the first liquid reservoir 310 and the second liquid reservoir 320, the liquid selectively circulates between the first liquid reservoir 310 and the second liquid reservoir 320. The liquid channel 330 selectively communicates with the second liquid reservoir 320 and the first liquid reservoir 310, which means that the liquid channel 330 may or may not communicate with the second liquid reservoir 320 and the first liquid reservoir 310. In some examples, when the liquid does not need to be retained in the first liquid reservoir 310, that is, the cutting tool 10 is not used, the liquid channel 330 communicates with the first liquid reservoir 310 and the second liquid reservoir 320, and the liquid flows from the first liquid reservoir 310 into the second liquid reservoir 320. Then, the first liquid reservoir 310 is caused not to communicate with the second liquid reservoir 320, and since the liquid is stored in the second liquid reservoir 320, the liquid does not spill during transportation.

In this example, the second liquid reservoir 320 is located below the first liquid reservoir 310, and the second liquid reservoir 320 at least partially overlaps the first liquid reservoir 310 in the up and down direction.

The liquid in the first liquid reservoir 310 may be moved to the second liquid reservoir 320 through the following examples.

In some examples, a communication port is provided between the first liquid reservoir 310 and the second liquid reservoir 320, and a blocking portion 340 is provided at the communication port and is selectively opened. When the cutting tool 10 is not used, the blocking portion 340 is opened so that the first liquid reservoir 310 communicates with the second liquid reservoir 320, and the liquid flows into the second liquid reservoir 320 from the first liquid reservoir 310. Then, the blocking portion 340 is closed so that the liquid does not spill during transportation.

The blocking portion 340 may be a plug, and the plug is detachably connected to the communication port. When the cutting tool 10 is not used, the plug is opened so that the first liquid reservoir 310 communicates with the second liquid reservoir 320, and the liquid flows into the second liquid reservoir 320 from the first liquid reservoir 310. Then, the plug is closed so that the liquid does not spill during transportation.

Before the cutting tool 10 is used, the liquid in the second liquid reservoir 320 may be moved to the first liquid reservoir 310 through the following examples.

In other examples, the second liquid reservoir 320 is detachably connected to the first liquid reservoir 310. After the second liquid reservoir 320 is detached, the communication portion of the first liquid reservoir 310 is sealed through, for example, the plug 340. The liquid in the second liquid reservoir 320 is poured into the first liquid reservoir 310.

In some examples, the second liquid reservoir 320 is a deformable container. The liquid flows from the second liquid reservoir 320 to the first liquid reservoir 310 when the second liquid reservoir 320 is deformed by a force. Before the cutting tool 10 is used, the blocking portion 340 is opened so that the first liquid reservoir 310 communicates with the second liquid reservoir 320, the second liquid reservoir 320 is squeezed so that the liquid flows into the first liquid reservoir 310 from the second liquid reservoir 320, then the blocking portion 340 is closed, and the cutting tool 10 is ready for use. The second liquid reservoir 320 may be a flexible barrel or bellows, specifically a rubber barrel.

In some examples, the blocking portion 340 includes a hole causing the second liquid reservoir 320 to communicate with the first liquid reservoir 310. The hole located in the first liquid reservoir 310 is located above the liquid level in the first liquid reservoir 310. That is to say, when the liquid is stored in the first liquid reservoir 310, the hole located in the first liquid reservoir 310 is above the liquid. When the liquid needs to be retained in the first liquid reservoir 310, the liquid does not enter the second liquid reservoir 320 through the hole. When the liquid needs to flow from the second liquid reservoir 320 to the first liquid reservoir 310, the user does not need to touch the blocking portion 340, and the second liquid reservoir 320 is squeezed so that the liquid flows into the first liquid reservoir 310 from the second liquid reservoir 320. In some examples, the blocking portion 340 includes a tubular plug or a hollow plug.

The blocking portion 340 may be a one-way valve, and the one-way valve allows the liquid to flow from the second liquid reservoir 320 to the first liquid reservoir 310. Before the cutting tool 10 is used, the second liquid reservoir 320 is squeezed so that the liquid flows into the first liquid reservoir 310 from the second liquid reservoir 320. When the cutting tool 10 is not used, the one-way valve is detached so that the first liquid reservoir 310 communicates with the second liquid reservoir 320, and the liquid flows into the second liquid reservoir 320 from the first liquid reservoir 310. Since the one-way valve can allow the liquid to flow through it only in one way, the liquid is stored in the second liquid reservoir 320 and does not spill in the case where the second liquid reservoir 320 is not squeezed.

The blocking portion 340 may be the plug. Before the cutting tool 10 is used, the plug is opened, the second liquid reservoir 320 is squeezed so that the liquid flows from the second liquid reservoir 320 into the first liquid reservoir 310, then the plug is closed, and the cutting tool 10 is ready for use.

In the case where the second liquid reservoir 320 and the first liquid reservoir 310 are detachable, before the cutting tool 10 is used, the second liquid reservoir 320 is detached, the liquid in the second liquid reservoir 320 is poured into the first liquid reservoir 310 directly or through a pipe, and the cutting tool 10 is ready for use. The second liquid reservoir 320 is detachable, thereby facilitating replacement and cleaning.

In the case where the second liquid reservoir 320 and the first liquid reservoir 310 are detachable, the second liquid reservoir 320 and the first liquid reservoir 310 are connected to each other to form a seal to prevent the liquid from spilling.

In some examples, not only the communication port but also a pipe may cause the first liquid reservoir 310 and the second liquid reservoir 320 to communicate with each other. For example, the second liquid reservoir 320 is detachably connected to the first liquid reservoir 310, the second liquid reservoir 320 is located below the first liquid reservoir 310, the top of the second liquid reservoir 320 communicates with the bottom of the first liquid reservoir 310 through the communication port, and the top of the second liquid reservoir 320 communicates with the top of the first liquid reservoir 310 through the pipe. When the cutting tool 10 is not used, the blocking portion 340 at the communication port is opened so that the first liquid reservoir 310 communicates with the second liquid reservoir 320 and the liquid flows into the second liquid reservoir 320 from the first liquid reservoir 310, and then the blocking portion 340 is closed. Before the cutting tool 10 is used, the second liquid reservoir 320 is detached and lifted to a higher position so that the liquid in the second liquid reservoir 320 flows into the first liquid reservoir 310 through the pipe, and then the second liquid reservoir 320 is connected to the first liquid reservoir 310.

In this example, the second liquid reservoir 320 and the first liquid reservoir 310 may be connected to each other through threads so that it is convenient to mount and detach the second liquid reservoir 320 and the first liquid reservoir 310 and a seal can be formed. In some examples, the second liquid reservoir 320 may be connected to the first liquid reservoir 310 through a sealing ring and a latch structure.

For the first liquid reservoir 310, the inner cavity is defined by the bottom of the first liquid reservoir 310 and at least one sidewall of the first liquid reservoir 310. The sidewall may be perpendicular to the bottom. Optionally, the first liquid reservoir 310 is substantially rectangular and includes the bottom and four sidewalls forming the periphery of the inner cavity.

The preceding examples may be selectively combined according to actual needs. For example, the cutting tool 10 provided with the housing 400 includes the first liquid reservoir 310 and the second liquid reservoir 320, the cover body 420 is connected to the box body 410 in an openable and closable manner, the cover body 420 and the box body 410 are combined to form the substantially box-shaped storage space, and the cutting unit 100, the workbench 200, the first liquid reservoir 310, and the second liquid reservoir 320 are accommodated in the storage space. For example, the cutting tool 10 provided with the housing 400 includes the first liquid reservoir 310 and the second liquid reservoir 320, the cover body 420 is connected to the box body 410 in an openable and closable manner, the cover body 420 and the box body 410 are combined to form the substantially box-shaped storage space, the cutting unit 100, the workbench 200, the first liquid reservoir 310, and the second liquid reservoir 320 are accommodated in the storage space, and the platen has the multiple mounting positions relative to the support assembly.

The position of the first liquid reservoir 310 and the position of the second liquid reservoir 320 may be set according to actual needs. In some examples, the second liquid reservoir 320 is disposed below the first liquid reservoir 310 so that it is convenient for the liquid in the first liquid reservoir 310 to flow into the first liquid reservoir 310 under the action of gravity.

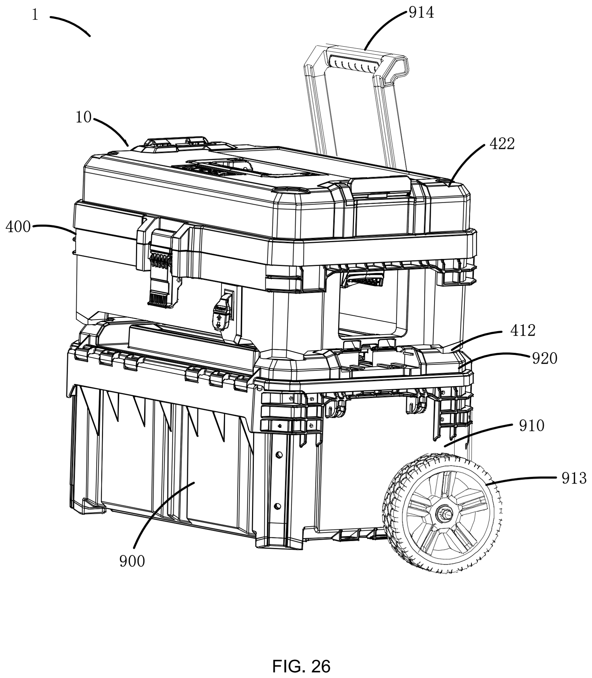

As described above, the cutting tools 10 can be stacked, that is, multiple housings 400 can be detachably stacked. Some examples of the present application further provide a power tool system 1. As shown in FIG. 26, the power tool system 1 includes at least one toolbox mechanism and the cutting tool 10. The toolbox mechanism includes at least one toolbox 900 detachably stacked, and the housing 400 can be detachably stacked with the toolbox 900. The toolbox mechanism, that is, the toolbox 900 is disposed on the upper side of the cutting tool 10 or the lower side of the cutting tool 10 along the preset stacking direction. The toolbox mechanism is provided with a recess and a protrusion receivable by the recess. In this example, the recess provided on the toolbox 900 may receive the protrusion 412 on a housing 400. The protrusion provided on the toolbox 900 may be received by the recess 422 on a housing 400. Relative movement between the toolbox mechanism and the cutting tool 10 is limited when the toolbox mechanism is stacked with the cutting tool 10. It is to be understood that the toolbox mechanism, that is, the toolbox 900 is provided with the second latch. Since the housing 400 is substantially box-shaped and can be stacked with the toolbox 900, the convenience is further improved. The cutting tool 10 may be stacked with the toolbox 900 during storage or transportation, and common tools may be accommodated in the toolbox 900, which is not limited herein.

The toolbox mechanism, that is, the toolbox 900 includes a toolbox body 910 and a tool cover body 920 that form an accommodation space. The accommodation space is configured to store a power tool. The accommodation space is configured to store a direct current power supply.

In some examples, the toolbox mechanism further includes a traveling mechanism 913 and a grip mechanism 914. The traveling mechanism 913 is used for causing the whole formed by the toolbox 900 and the cutting tool 10 or any one of the toolbox 900 and the cutting tool 10 to move. The traveling mechanism 913 includes wheels. The grip mechanism 914 is used for facilitating the user's holding when the toolbox mechanism moves.

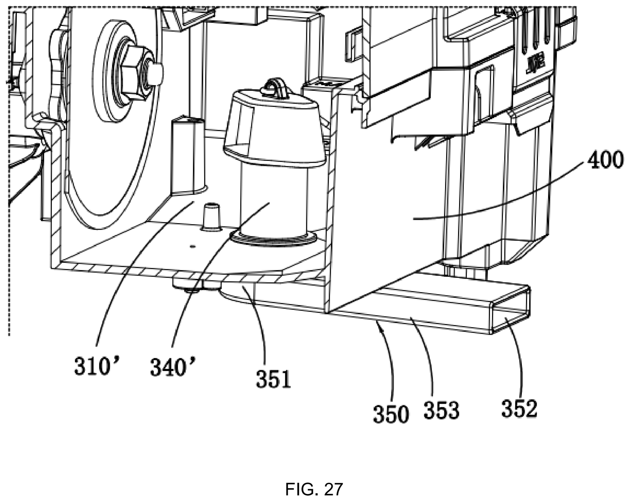

As shown in FIGS. 27 to 30, as an example of the present application, the cutting tool 10 includes a drainage mechanism 350. The drainage mechanism 350 is connected to the liquid reservoir. In this example, the liquid reservoir includes a first liquid reservoir 310', and the drainage mechanism 350 is formed at or connected to a water outlet 311' of the first liquid reservoir 310'. The drainage mechanism 350 includes a connecting end 351 and a water outlet end 352. In this example, the connecting end 351 is connected to the water outlet 311' of the first liquid reservoir 310'. The water outlet end 352 selectively extends beyond the workbench (not shown). Optionally, the water outlet end 352 selectively extends beyond the housing 400 of the cutting tool. When the liquid in the liquid reservoir needs to be drained, the water outlet end 352 is operated beyond the workbench or the housing 400 of the cutting tool, and the liquid in the liquid reservoir is drained out of the liquid reservoir through the drainage mechanism 350. In the related art, the liquid reservoir is disposed below the workbench and inside the housing 400, and therefore, when the liquid in the liquid reservoir needs to be drained, the cutting tool 10 needs to be carried to a position where the water can be drained, and then the liquid is drained. In this example, the drainage mechanism 350 is provided with the water outlet end 352 which selectively extends beyond the workbench or the housing 400. Thus, the liquid in the liquid reservoir can be drained from the liquid reservoir through the drainage mechanism 350 without carrying the cutting tool 10. Especially for the stackable cutting tool 10, when the cutting tool 10 is fixed to and stacked with the toolbox 900 or another cutting tool, the liquid can be drained directly through the water outlet end 352 of the drainage mechanism 350 extending beyond the workbench or the housing 400 without releasing the cutting tool 10 from the stacked state. It is more convenient for the user to use the cutting tool 10, and the use efficiency is improved.

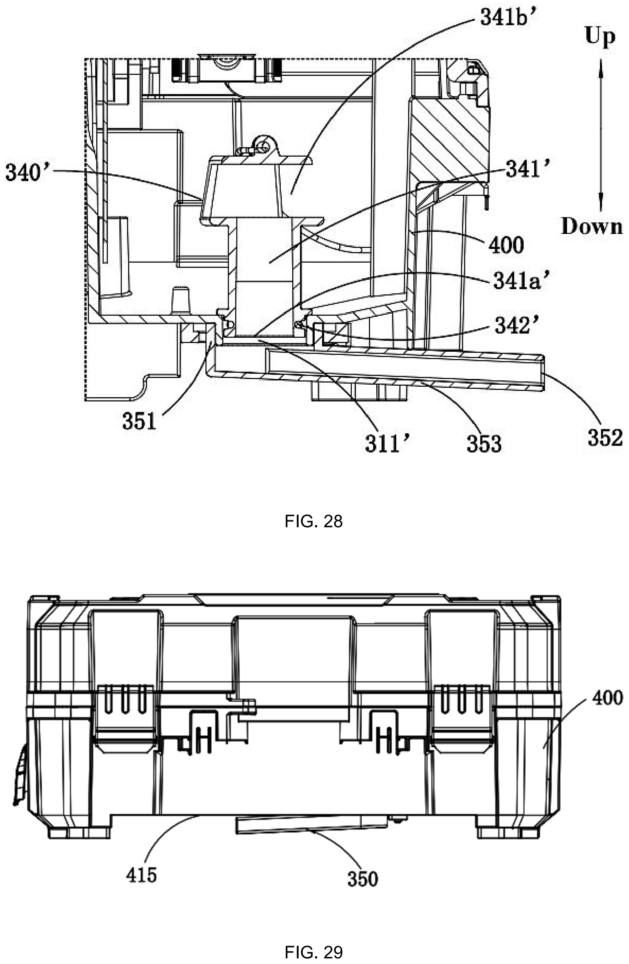

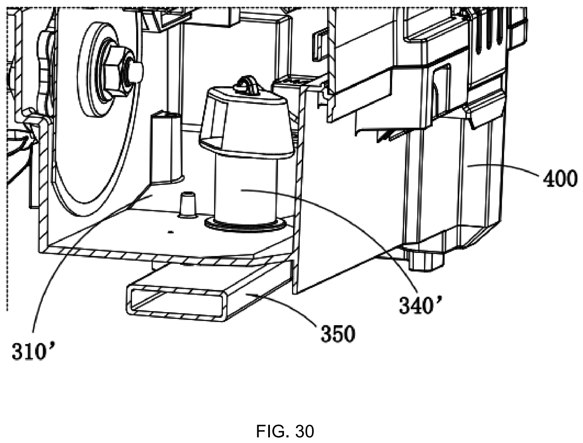

As shown in FIGS. 27 and 28, the connecting end 351 of the drainage mechanism 350 is rotatably connected to the water outlet 311'. Since a certain distance exists between the water outlet 311' and the workbench or the housing 400, the drainage mechanism 350 further includes an extension pipe 353 so that the water outlet end 352 can extend beyond the workbench or the housing 400 when the connecting end 351 is connected to the water outlet 311'. In this example, the drainage of the liquid out of the cutting tool 10 is used as an example. When the water needs to be drained, the drainage mechanism 350 is rotated so that the water outlet end 352 extends beyond the housing 400 of the cutting tool. As shown in FIGS. 29 and 30, the drainage mechanism 350 further includes a stored state where the drainage mechanism 350 is accommodated in the housing 400, and the housing 400 is provided with a storage portion 415 for storing at least the water outlet end 352. It is to be understood that the drainage mechanism 350 includes a drainage state (as shown in FIG. 27) and the stored state (as shown in FIG. 29) and is selectively switched between the drainage state and the stored state. In this example, the connecting end 351 is rotatably connected to the water outlet 311', thereby switching the drainage mechanism 350 between the drainage state and the stored state. In other alternative examples, the connecting end 351 is fixedly connected to the water outlet 311', and the drainage mechanism 350 is switched between the drainage state and the stored state by deforming or rolling up the extension pipe 353. In this example, when the drainage mechanism 350 is in the stored state, the drainage mechanism 350 is not beyond the outer edge of the housing 400.

A plug 340' is disposed on the water outlet 311' of the first liquid reservoir 310'. The plug 340' may block the water outlet 311', and optionally, the liquid flows out from the water outlet 311'. In this example, the plug 340' is insertable into the water outlet 311' to prevent the liquid from flowing out from the water outlet 311'. Optionally, the connecting end 351 of the drainage mechanism 350 is connected to the outer side of the water outlet 311', and the plug 340' is inserted into the water outlet 311'. Exemplarily, the plug 340' is sealingly connected to the water outlet 311'. In this example, a sealing ring 342' is disposed at the joint of the plug 340' and the water outlet 311'. A drainage channel 341' is provided inside the plug 340'. A first end 341a' of the drainage channel 341' extends into the water outlet 311', and a second end 341b' of the drainage channel 341' is provided inside the first liquid reservoir 310'. The second end 341b' of the drainage channel 341' is provided on the upper portion of the plug 340'. When the height of the liquid in the first liquid reservoir 310' exceeds a liquid storage threshold, the liquid enters the drainage channel 341' from the second end 341b' and then flows out of the first liquid reservoir 310'. In this example, the second end 341b' communicates with the drainage mechanism 350 so that when the height of the liquid in the first liquid reservoir 310' exceeds the liquid storage threshold, the liquid enters the drainage channel 341' from the second end 341b' and then is drained into a designated container through the water outlet 311' and the drainage mechanism 350.

As shown in FIG. 28, in the up and down direction, the connecting end 351 of the drainage mechanism 350 is higher than the water outlet end 352 so that the liquid conveniently flows out. It is to be understood that the connecting end 351 of the drainage mechanism 350 serves as an upstream side, the water outlet end 352 serves as a downstream side, and the liquid level of the upstream side is higher than the liquid level of the downstream side, which is conducive to the flow of the liquid.

In some examples, the liquid reservoir includes the first liquid reservoir 310' and the second liquid reservoir (not shown) that selectively communicate with each other. The drainage mechanism 350 is formed at or connected to a water outlet of the second liquid reservoir. The specific structure of the drainage mechanism 350 is not affected, and therefore, the details are not repeated.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A cutting tool, comprising:
a cutting unit comprising a motor and a saw blade driven by the motor;
a workbench, wherein the saw blade at least partially protrudes through the workbench;
a liquid reservoir, wherein the liquid reservoir is located below the workbench and comprises an inner cavity configured to accommodate liquid; and
a housing comprising a box body and a cover body, the box body is formed with a first accommodation portion, and the first accommodation portion is configured to accommodate the liquid reservoir;
wherein the cover body and the box body are combined to form a substantially box-shaped storage space, the cutting unit, the workbench, and the liquid reservoir are accommodated in the storage space, and when the cover body moves away from the box body, the workbench is at least partially exposed.

2. The cutting tool according to claim 1, wherein the cover body selectively covers an opening of the box body, at least one of the box body and the cover body is provided with a first latch, and the first latch is operated to fix the cover body and the box body.

3. The cutting tool according to claim 1, wherein at least one of the box body and the cover body is provided with a recess, and at least one of the box body and the cover body is provided with a protrusion received by the recess.

4. The cutting tool according to claim 3, wherein recesses and protrusions of at least two cutting tools mate with each other to form a stacked state along a preset stacking direction.

5. The cutting tool according to claim 4, wherein the recesses have slots recessed along a direction parallel to the preset stacking direction, and the protrusions extend along the direction parallel to the preset stacking direction to mate with the slots.

6. The cutting tool according to claim 4, wherein a stop portion is disposed in at least one of the recesses, and at least one sidewall of a respective protrusion of the protrusions mates with the stop portion to limit relative movement between the respective protrusion and the at least one recess in a direction perpendicular to the preset stacking direction.

7. The cutting tool according to claim 3, wherein at least one of the box body and the cover body is provided with a second latch, the second latch moves between a locking position and an unlocking position, and the second latch limits relative movement between the protrusion and the recess when the second latch is at the locking position.

8. The cutting tool according to claim 1, wherein the workbench comprises:
a platen providing a plane that supports a machined workpiece; and
a support assembly for supporting the platen, wherein the platen is slidably connected to the support assembly and is capable of driving the machined workpiece to slide relative to the support assembly along a cutting direction.

9. The cutting tool according to claim 1, wherein the cutting unit further comprises a shield assembly, the shield assembly comprises a shield housing and a shield lock, the shield housing covers the saw blade, and the shield lock is capable of locking the shield housing and the workbench.

10. The cutting tool according to claim 1, wherein an attachment storage portion is formed on an inner wall of the cover body and is capable of storing an attachment.

11. A power tool system, comprising the cutting tool according to any one of claims 1 to 10 and at least one toolbox mechanism, wherein the toolbox mechanism is disposed on an upper side of the cutting tool or a lower side of the cutting tool along a preset stacking direction, and the toolbox mechanism is provided with a recess and a protrusion receivable by the recess.

12. The power tool system according to claim 11, wherein relative movement between the toolbox mechanism and the cutting tool is limited when the toolbox mechanism is stacked with the cutting tool.

13. The power tool system according to claim 11, wherein the toolbox mechanism comprises a traveling component, and the traveling component comprises at least wheels.

14. The power tool system according to claim 11, wherein the toolbox mechanism comprises a toolbox body and a tool cover body that form an accommodation space, and the accommodation space is configured to store a power tool.

15. The power tool system according to claim 11, wherein the toolbox mechanism comprises a toolbox body and a tool cover body that form an accommodation space, and the accommodation space is configured to store a direct current power supply.

16. A cutting tool, comprising:
a cutting unit comprising a motor and a saw blade driven by the motor;
a workbench, wherein the saw blade at least partially protrudes through the workbench; and
a liquid reservoir, wherein the liquid reservoir is located below the workbench and comprises an inner cavity configured to accommodate liquid;
wherein the workbench comprises:
a platen providing a plane that supports a machined workpiece and a working groove through which the saw blade at least partially passes;
a support assembly for supporting the platen, wherein the platen has a plurality of mounting positions relative to the support assembly; and
a retaining assembly, wherein the retaining assembly is configured to fix the platen at a selected mounting position and retain the platen at the selected mounting position when the motor drives the saw blade to work.

17. The cutting tool according to claim 16, wherein the plurality of mounting positions are arranged at intervals along a direction of a first straight line, and the direction of the first straight line intersects with a cutting direction of the machined workpiece.

18. The cutting tool according to claim 16, wherein the plurality of mounting positions are arranged at intervals along a direction of a first straight line, and the direction of the first straight line is parallel to a cutting direction of the machined workpiece.

19. The cutting tool according to claim 16, further comprising a guide assembly extending along a cutting direction, wherein the guide assembly is used for guiding the machined workpiece to move relative to the platen along the cutting direction, and the guide assembly is detachably disposed on the platen.

20. The cutting tool according to claim 19, wherein the guide assembly comprises a guide member and a locking assembly, the guide member extends along the cutting direction, and the locking assembly is used for limiting relative movement between the guide member and the workbench.

21. The cutting tool according to claim 20, wherein the locking assembly comprises a first locking assembly and a second locking assembly, the first locking assembly is disposed at one end of the guide member and has a locking point with the workbench, and the second locking assembly is disposed at the other end of the guide member and has at least two locking points with the workbench.

22. The cutting tool according to claim 16, wherein the retaining assembly comprises a limiting member and a first locking portion, the limiting member positions the platen and the support assembly, and the first locking portion is disposed on the support assembly and applies a biasing force to at least one side of the platen.

23. The cutting tool according to claim 16, wherein the retaining assembly comprises a magnet and a magnetic attraction member, one of the magnet and the magnetic attraction member is disposed on the platen and the other is disposed on the support assembly, and the magnet and the magnetic attraction member are attracted to each other.

24. The cutting tool according to claim 16, wherein the platen and the support assembly are provided with a pivot, and the platen is capable of being opened and closed around the pivot and is movable along a direction of a first straight line, wherein the direction of the first straight line is perpendicular or parallel to the pivot.

25. The cutting tool according to claim 16, wherein the retaining assembly comprises a fastener, and the platen is detachably connected to the support assembly through the fastener.

26. A cutting tool, comprising:
a cutting unit comprising a motor and a saw blade driven by the motor;
a workbench, wherein the saw blade at least partially protrudes through the workbench; and
a liquid reservoir, wherein the liquid reservoir is located below the workbench and comprises an inner cavity configured to accommodate liquid;
wherein the workbench comprises:
a platen providing a plane that supports a machined workpiece, wherein the platen comprises at least two working grooves through which the saw blade selectively passes;
a support assembly for supporting the platen; and
a retaining assembly, wherein the retaining assembly is configured to fix the platen after the saw blade passes through a selected one of the at least two working grooves.

27. A cutting tool, compris
a cutting unit comprising a motor and a saw blade driven by the motor;
a workbench, wherein the saw blade at least partially protrudes through the workbench;
a first liquid reservoir, wherein the first liquid reservoir is located below the workbench and comprises an inner cavity configured to accommodate liquid; and
a second liquid reservoir located below the workbench, wherein the second liquid reservoir and the first liquid reservoir are formed with or connected to a liquid channel, and when the liquid channel communicates with the second liquid reservoir and the first liquid reservoir, the liquid selectively circulates between the first liquid reservoir and the second liquid reservoir.

28. The cutting tool according to claim 27, wherein a communication port is provided between the first liquid reservoir and the second liquid reservoir, a blocking portion is provided at the communication port, and when the blocking portion is selectively opened, the liquid channel communicates with the second liquid reservoir and the first liquid reservoir.

29. The cutting tool according to claim 28, wherein the blocking portion comprises a one-way valve, and the one-way valve allows the liquid to flow from the second liquid reservoir to the first liquid reservoir.

30. The cutting tool according to claim 28, wherein the blocking portion is a plug, and the plug is detachably connected to the communication port.

31. The cutting tool according to claim 27, wherein the second liquid reservoir is a deformable container, and the liquid flows from the second liquid reservoir to the first liquid reservoir when the second liquid reservoir is deformed by a force.

32. The cutting tool according to claim 31, wherein the second liquid reservoir is a flexible-wall container, or the second liquid reservoir comprises bellows.

33. The cutting tool according to claim 27, wherein the second liquid reservoir is detachably connected to the first liquid reservoir.

34. The cutting tool according to claim 33, wherein the second liquid reservoir and the first liquid reservoir are connected to each other to form a seal.

35. The cutting tool according to claim 27, wherein the inner cavity is defined by a bottom of the first liquid reservoir and at least one sidewall of the first liquid reservoir.

36. The cutting tool according to claim 27, further comprising a box body and a cover body, wherein the cover body and the box body are combined to form a substantially box-shaped storage space, the cutting unit, the workbench, the first liquid reservoir, and the second liquid reservoir are accommodated in the storage space, and when the cover body moves away from the box body, the workbench is at least partially exposed.
